Europäisches Patentamt

European Patent Office

Office européen des brevets

(19)

(11) Numéro de publication : **0 095 427**
**B1**

(12) **FASCICULE DE BREVET EUROPÉEN**

(45) Date de publication du fascicule du brevet :
19.12.84

(51) Int. Cl.³ : **F 28 D 13/00// B01J8/18**

(21) Numéro de dépôt : 83401053.0

(22) Date de dépôt : 26.05.83

(54) **Procédé de réglage du coefficient de transfert thermique d'un échangeur de chaleur et échangeur de chaleur perfectionné pour la mise en œuvre du procédé.**

(30) Priorité : 26.05.82 FR 8209188

(43) Date de publication de la demande :
30.11.83 Bulletin 83/48

(45) Mention de la délivrance du brevet :
19.12.84 Bulletin 84/51

(84) Etats contractants désignés :
AT BE CH DE FR GB IT LI LU NL SE

(56) Documents cités :
FR-A- 752 896
FR-A- 1 117 778
FR-A- 2 227 508
US-A- 3 565 022
US-A- 3 996 863
US-A- 4 270 599
MACHINE DESIGN, vol. 50, no. 12, mai 1978, pages
18-23, R.B. ARONSON: "Cleaning up king coal"

(73) Titulaire : **CREUSOT-LOIRE**
**42 rue d'Anjou**
**F-75008 Paris (FR)**

(72) Inventeur : **Borgnat, Daniel**
**4 Impasse des Peupliers - Torcy**
**F-71210 Montchanin (FR)**

(74) Mandataire : **Le Brusque, Maurice et al**
**CREUSOT-LOIRE 15 rue Pasquier**
**F-75383 Paris Cedex 08 (FR)**

Jouve, 18, rue St-Denis, 75001 Paris, France

## Description

L'invention a pour objet un procédé de réglage du coefficient de transfert de chaleur effectué entre une matière granulaire et une surface d'échange à l'intérieur d'un échangeur de chaleur et couvre également l'échangeur de chaleur perfectionné pour la mise en œuvre du procédé.

On connaît des échangeurs de chaleur constitués d'une cuve à axe vertical dans laquelle est ménagée une circulation descendante d'une charge de matière granulaire entre un orifice d'alimentation et un orifice d'évacuation, placée à ses extrémités supérieures et inférieures, la charge constituant un lit mobile qui se déplace de haut en bas au contact d'un organe d'échange allongé s'étendant à l'intérieur de la cuve entre deux niveaux, respectivement inférieur et supérieur de celle-ci. L'organe d'échange peut être noyé dans la charge ou bien recouvrir la paroi interne de la cuve et il peut être constitué par exemple par un tube ou un faisceau de tubes parcourus par un fluide caloporteur.

Pour favoriser les échanges thermiques, on a déjà eu l'idée d'injecter à la base de la cuve un gaz réparti de façon homogène à l'intérieur de la charge et qui, même avec un débit relativement faible, forme un courant ascendant traversant la charge de bas en haut et susceptible de fluidiser celle-ci dès lors que la vitesse de circulation est suffisante. On peut ainsi augmenter considérablement le coefficient de transfert thermique de l'échangeur.

Généralement, le coefficient d'échange thermique d'un tel échangeur est relativement constant et, pour faire varier la puissance de l'échangeur, on est amené par exemple à cloisonner le lit fluidisé en compartiments dont on ajuste le nombre en fonction de la puissance souhaitée. On peut ainsi faire varier la hauteur de la charge ou sa vitesse de circulation descendante ainsi que le débit du fluide caloporteur, mais les ajustements ne sont pas instantanés et ne peuvent se faire que d'une façon limitée. Or, dans certaines applications, il peut être utile de faire varier très rapidement et de façon relativement importante le coefficient d'échange thermique de l'échangeur par exemple pour maintenir constante la température de sortie des matières ou l'élévation de température du fluide caloporteur quel que soit le débit des matières.

L'invention a pour objet un procédé de réglage du transfert thermique et un échangeur perfectionné permettant d'obtenir un tel résultat.

Conformément à l'invention, dans un échangeur de chaleur constitué d'une cuve contenant une charge de matière granulaire mise au contact d'un organe d'échange et à l'intérieur de laquelle on injecte un gaz, on règle les conditions de circulation du gaz traversant la charge de bas en haut de telle sorte que la vitesse de circulation ascendante soit initialement inférieure, à la base de la cuve, à la vitesse critique de fluidisation puis augmente progressivement et atteigne la dite vitesse critique à un niveau réglable compris entre les niveaux inférieur et supérieur de l'organe d'échange celui-ci couvrant ainsi deux zones superposées de la charge dont les hauteurs varient en sens inverse l'une de l'autre, une zone inférieure dense à faible coefficient d'échange et une zone supérieure fluidisée à fort coefficient d'échange, le réglage du niveau de fluidisation permettant de déterminer le coefficient d'échange global de l'ensemble de l'échangeur.

De préférence, on règle la vitesse de circulation ascendante du gaz en faisant varier le débit du gaz de fluidisation injecté dans la cuve.

Dans le cas le plus général où la matière granulaire subit un refroidissement entre les extrémités supérieure et inférieure de la cuve, on règle les conditions de circulation du gaz qui circule à contre-courant vers le haut de telle sorte que l'échauffement correspondant détermine une augmentation de sa vitesse de circulation ascendante, supérieure à la différence entre la vitesse critique de fluidisation et la vitesse initiale d'interjection à la base de l'échangeur et l'on choisit cette vitesse initiale de telle sorte que, compte tenu de l'augmentation subie, la vitesse critique de fluidisation soit atteinte au niveau souhaité de l'échangeur.

Dans une application particulière du procédé à un échangeur utilisé pour le refroidissement d'une matière granulaire, on règle la température de la matière à la sortie de l'échangeur par variation du niveau de fluidisation en agissant sur le débit de gaz injecté dans l'échangeur.

Dans une autre application du procédé à un échangeur utilisé pour le chauffage d'un fluide caloporteur circulant à l'intérieur de l'organe d'échange, on règle la température de sortie du fluide caloporteur par variation du niveau de fluidisation et par conséquent de la part des surfaces d'échange noyées respectivement dans la partie dense et dans la partie fluidisée de la charge.

L'invention a également pour objet un échangeur de chaleur à coefficient d'échange variable comprenant, pour la mise en œuvre du procédé, des moyens d'augmentation progressive de la vitesse de circulation ascendante du gaz injecté, de la partie inférieure à la partie supérieure de la cuve, à partir d'une vitesse initiale inférieure à la vitesse critique de fluidisation et un moyen de réglage de la vitesse initiale à la base de la cuve pour le contrôle du niveau où est atteint la vitesse critique de fluidisation.

Dans un mode de réalisation préférentiel, le moyen d'augmentation de la vitesse de circulation est constitué par un rétrécissement progressif de la section transversale de passage du gaz de bas en haut de l'échangeur.

Dans un autre mode de réalisation, le moyen d'augmentation de la vitesse de circulation est constitué par une pluralité de rampes d'injection réparties à différents niveaux sur la hauteur de la cuve, s'étendant sur toute la largeur de celle-ci, et munies de moyens individuels de réglage des débits injectés.

L'invention sera mieux comprise par la description suivante d'un mode de réalisation et d'une application particulière du procédé et du dispositif revendiqués.

La figure 1 est une vue schématique en élévation d'un échangeur de chaleur pour la mise en œuvre du procédé selon l'invention.

La figure 2 est un diagramme représentatif du fonctionnement de l'échangeur de la figure 1.

Les figures 3 et 4 représentent schématiquement deux variantes de l'échangeur.

La figure 5 illustre une application particulière du procédé selon l'invention.

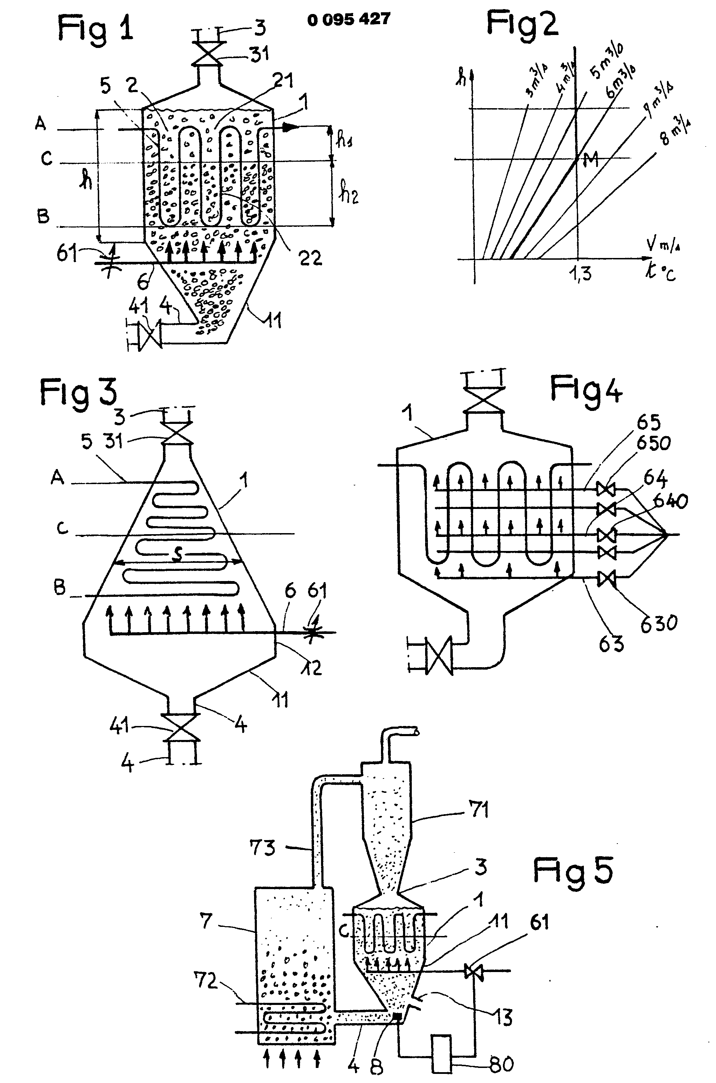

Sur la figure 1, on a représenté schématiquement un échangeur de chaleur constitué d'une cuve 1 à axe vertical remplie d'une charge 2 de matière granulaire introduite par une conduite d'alimentation 3 débouchant à la partie supérieure de la cuve et évacuée par une conduite de sortie 4 dans laquelle débouche le fond 11 de la cuve constitué normalement en forme de trémie. Les conduites d'alimentation 3 et d'évacuation 4 sont munies, de préférence, d'organes de réglage des débits respectivement 31 et 41, qui permettent de régler la hauteur (h) de la charge se trouvant dans la partie cylindrique de la cuve 1.

A l'intérieur de cette partie cylindrique est placé un organe d'échange thermique à grande surface d'échange, par exemple un faisceau de tubes 5 parcourus par un fluide caloporteur et s'étendant entre deux niveaux respectivement haut (A) et bas (B).

Enfin, à la partie inférieure de la cuve 1, au-dessous de la partie cylindrique, est placée au moins une rampe 6 munie d'une pluralité de buses d'injection vers le haut d'un gaz qui se répartit de façon homogène dans la charge de matière granulaire et remonte en circulant de bas en haut à travers celle-ci. La rampe 6 est munie d'un organe 61 de réglage du débit de gaz injecté. Une répartition homogène du gaz sur toute la largeur de la cuve peut être obtenue, de façon bien connue, en utilisant une grille de distribution.

La nature du gaz est choisie en fonction des besoins et ce peut être par exemple de l'air, de l'oxygène, de la vapeur d'eau, du gaz carbonique ou un gaz inerte.

On a ainsi ménagé à l'intérieur de la cuve 1 un lit mobile 2 qui se déplace du haut vers le bas au contact de l'organe d'échange 5. On sait que dans ce cas le coefficient d'échange thermique entre la matière granulaire 2 et le fluide caloporteur circulant dans les tubes 3 est relativement faible et c'est pourquoi on augmente ce coefficient d'échange en injectant au-dessous de la charge un gaz à une vitesse suffisante pour réaliser une fluidisation de la matière granulaire.

Par ailleurs, le gaz injecté à la base de la cuve et s'échappant par la conduite d'alimentation 3 ou par une cheminée, circule à contre-courant dans l'ensemble de la charge de matière granulaire et échange donc des calories avec celle-ci.

Dans le cas où la charge 2 de matière granulaire se refroidit du haut vers le bas au contact de l'organe d'échange 5, même si le débit de gaz injecté est insuffisant pour donner à celui-ci un rôle appréciable dans le refroidissement de la matière, on observe une montée en température du gaz qui circule à contre courant de la charge. A titre d'exemple, la figure 2 donne un diagramme représentant les variations de la température (t) du gaz, indiquée en abscisse, en fonction de la hauteur (h) indiquée en ordonnée. L'élévation de température étant sensiblement proportionnelle à la hauteur, à chaque débit de gaz injecté à la base de la cuve correspond une droite plus ou moins inclinée. Or on sait que le volume spécifique du gaz est sensiblement proportionnel à la température. D'autre part, lorsque le lit est dense, pour une matière assez homogène, la section de passage du gaz dépend de la section transversale de l'échangeur et lorsque celui-ci est cylindrique on peut considérer que la section de passage est constante. Par conséquent, l'élévation de température subie par le gaz au cours de son ascension dans la cuve, et à laquelle correspond une augmentation correspondante du volume spécifique détermine une accélération continue de sa vitesse de circulation ascendante et, si l'on indique la vitesse en abscisse, en choisissant judicieusement les échelles, les variations de la vitesse de circulation ascendante en fonction de la hauteur seront représentées, sur le diagramme de la figure 2, par les mêmes droites correspondant chacune à un débit d'injection.

Par ailleurs, on sait que pour une matière donnée relativement homogène, il existe une vitesse critique de fluidisation en dessous de laquelle la charge de matière reste dense et au-dessus de laquelle la matière est fluidisée. Par exemple, pour une matière telle que le charbon cendreux, la vitesse critique de fluidisation est de l'ordre de 1,3 m/s. Sur le diagramme de la figure 2, on va pouvoir tracer une droite parallèle à l'axe des ordonnées et ayant pour abscisse 1,3. On voit que pour un débit de gaz de 5 m/s le gaz a traversé toute la hauteur de la charge sans atteindre la vitesse critique de fluidisation, la charge restant sous forme d'un lit dense. En revanche, pour un débit de 6 m/s, la vitesse du gaz augmente progressivement jusqu'à atteindre la vitesse critique de 1,3 m/s à un point M placé à un niveau C de l'échangeur. Il en est de même de la température qui augmente progressivement jusqu'au point M. A partir du niveau C, toute la partie supérieure 21 de la charge, sur une hauteur h1, est fluidisée et l'on sait que, dans ce cas, la matière est à la même température sur toute la hauteur fluidisée. Par conséquent, au-dessus du niveau C, le gaz reste à la température atteinte au point M et il en est de même de la vitesse qui reste égale à la vitesse critique de fluidisation.

On a ainsi défini à l'intérieur de la charge et entre les deux niveaux A et B de l'organe d'échange, deux zones superposées, une zone supérieure 21 fluidisée comprise entre les niveaux A et C de hauteur (h1) et une zone inférieure dense 22 comprise entre les niveaux C et B et de hauteur h2. Or la fluidisation entraîne une variation très importante du coefficient d'échange thermique qui, par exemple, peut passer de 20 W/m²/°C dans un lit mobile dense à 200 W/m²/°C dans un lit fluidisé. On a ainsi ménagé à l'intérieur de l'échangeur et sur la hauteur de l'organe d'échange 5 deux zones à coefficients d'échanges très différents et dont on peut faire varier en sens inverse les hauteurs relatives en agissant sur le débit de gaz injecté par la rampe 6 au-dessous de l'organe d'échange 5. En effet, en augmentant le débit de gaz injecté, on augmente la vitesse initiale de circulation ascendante qui atteint plus vite la vitesse critique de fluidisation ; d'autre part comme on l'a représenté sur la figure 2, à un débit plus fort correspond une plus forte augmentation de vitesse en fonction de la hauteur, puisque, dans une même section de passage dans l'échangeur, l'augmentation relative de volume qui résulte d'une même élévation de température, s'applique à un volume plus important de gaz.

On dispose ainsi d'un échangeur dont on peut faire varier de façon notable le coefficient d'échange global.

Par exemple, pour un débit donné de matière dans la cuve, sans modifier le débit du fluide caloporteur dans le réseau de tube 5, il suffit d'augmenter le débit de fluide injecté en agissant sur l'organe de réglage 61 pour augmenter la hauteur h1 de l'échangeur baignant dans la zone fluidisée 21 et par conséquent la quantité de chaleur transférée de la charge au fluide caloporteur. On pourra donc, sans modifier les débits de la charge et du fluide caloporteur, maintenir constante la température de l'un de ces deux éléments quelles que soient les variations de température de l'autre en agissant uniquement sur le débit de fluide injecté, le réglage du robinet 61 étant par exemple asservi à la mesure de la température que l'on veut maintenir constante.

Mais pour un débit donné de fluide, on obtient également un effet d'autorégulation de l'échangeur.

En effet, la température moyenne de la charge de matière est sensiblement constante dans la partie fluidisée, entre les niveaux A et C, et varie assez peu dans la partie dense, entre les niveaux C et B, le coefficient d'échange thermique étant faible dans cette partie. D'autre part, on peut admettre que, en raison de la rapidité des échanges entre le gaz et la matière, la température du gaz à chaque niveau est sensiblement égale à celle des particules se trouvant au même niveau et notamment au niveau B à la base de l'échangeur. L'élévation de température étant proportionnelle à la hauteur, pour un débit donné de gaz, la vitesse de fluidisation sera atteinte à une certaine température qui correspond à l'augmentation de vitesse permettant d'atteindre la vitesse critique de fluidisation, cette température étant la température moyenne de toute la partie fluidisée de la charge. Par conséquent, pour un débit donné de gaz, la fluidisation s'établit à un certain niveau qui détermine la température de la partie fluidisée et pour un débit constant de gaz, ce niveau C de fluidisation reste stable. En effet, si, pour une raison ou une autre, l'épaisseur fluidisée h1 augmente, la surface d'échange augmente également et, la température diminuant, le niveau de fluidisation a tendance à s'élever pour diminuer la hauteur fluidisée.

En revanche, si le débit ou la température de la matière à l'entrée dans l'échangeur varie, le niveau de fluidisation va varier pour adapter la surface d'échange noyée dans la partie fluidisée, la température restant sensiblement constante.

Dans l'exemple qui vient d'être décrit, on s'était placé dans le cas d'un échangeur à section constante dans lequel s'effectue un refroidissement de la matière et par conséquent un échauffement des gaz qui produit l'augmentation de la vitesse de circulation ascendante. Cependant, cette augmentation de vitesse peut également être obtenue par d'autres moyens.

Dans le mode de réalisation de la figure 3, la cuve 1 de l'échangeur est limitée par une paroi en forme de surface conique s'évasant vers le bas jusqu'à une base élargie 12 à la hauteur de laquelle sont placées les rampes 6 d'injection de gaz, le fond 11 ayant comme précédemment, la forme d'une trémie qui débouche sur une conduite d'évacuation 4.

L'organe d'échange 5 s'étend entre deux niveaux A et B de cette enveloppe conique.

Le gaz injecté par la rampe 6 remonte à l'intérieur de la cuve 1 dont la section transversale de passage se rétrécit progressivement de bas en haut. Il en résulte donc, par un moyen purement mécanique, une augmentation de la vitesse de circulation ascendante du gaz et l'on peut déterminer le débit d'injection dans la rampe 6 de telle sorte que la vitesse initiale de circulation au niveau B soit inférieure à la vitesse critique de fluidisation et que cette dernière soit atteinte à un niveau intermédiaire C dont la position dépend de la vitesse initiale et par conséquent du débit injecté.

L'augmentation de vitesse peut venir uniquement du rétrécissement de section et dans ce cas, la forme de la cuve et la vitesse initiale des gaz seront déterminées de telle sorte que le rétrécissement de la section transversale de passage détermine une augmentation de vitesse suffisante pour atteindre la vitesse critique de fluidisation au niveau souhaité. On pourra utiliser un tel mode de réalisation dans les cas où l'échange de chaleur entre la matière granulaire et le fluide caloporteur n'est pas destiné à produire un refroidissement de la matière. Ce sera le cas par exemple lorsque l'échangeur sera utilisé pour un chauffage de la matière ou bien pour maintenir celle-ci à une température constante.

Cependant, il est bien certain que l'on peut combiner les dispositions des figures 1 et 3 en utilisant un échangeur à paroi conique inversée pour le refroidissement de la matière circulant de bas en haut. En effet, dans ce cas, l'effet du rétrécissement de la section de passage des gaz s'ajoute à celui de l'augmentation de température et augmente donc la variation de la vitesse de circulation ascendante des gaz du bas en haut de l'échangeur.

Un autre moyen de réglage des conditions de circulation des gaz à travers la charge est représenté sur la figure 4. Dans ce cas, on place à l'intérieur de la cuve 1 de l'échangeur une pluralité de rampes d'injection de gaz 63, 64, 65 qui sont espacées sur la hauteur de l'échangeur. Chaque rampe, est munie d'une pluralité de buses d'injection et s'étend sur toute la largeur de la cuve de façon à assurer une répartition homogène du gaz de fluidisation. En outre, chaque rampe est munie d'un organe individuel de réglage du débit 630, 640, 650.

On peut de la sorte injecter par exemple par l'une des rampes un débit de gaz suffisant pour provoquer la fluidisation de la partie de la charge se trouvant au-dessus de cette rampe et par conséquent, en choisissant la rampe d'injection, régler le niveau C à partir duquel se produit la fluidisation et la hauteur h1 de l'organe d'échange noyé dans la partie fluidisée.

On peut également utiliser simultanément plusieurs rampes d'injection et, en ajoutant ou en retranchant des rampes, régler le débit des gaz circulant du bas en haut de l'échangeur et choisir le niveau à partir duquel le débit injecté permet la fluidisation de la partie de la charge placée au-dessus de la rampe en fonctionnement située au niveau le plus élevé.

Bien entendu, dans ce cas également, la disposition de la figure 4 peut se combiner avec les dispositions des figures 1 et 3 car l'augmentation de vitesse résultant du choix de la rampe d'injection de gaz peut être accrue par un rétrécissement de la section de passage des gaz et une augmentation de température de ceux-ci.

L'invention dont on vient de décrire, à titre d'exemple, plusieurs modes de réalisation, peut faire l'objet de nombreuses applications. Cependant, une application particulièrement intéressante a été représentée sur la figure 5.

Dans ce cas, l'échangeur 1 selon l'invention sert au refroidissement d'une matière granulaire provenant d'un lit fluidisé réalisé dans une enceinte 7 reliée par une cheminée 73 à un séparateur 71 tel qu'un cyclone dont la partie inférieure débouche dans l'orifice d'entrée 3 de l'échangeur 1, la sortie 4 de celui-ci ramenant la matière granulaire au lit fluidisé après refroidissement. Une telle disposition peut servir, en particulier, au contrôle de la température du lit fluidisé ménagé dans l'enceinte 7 qui peut par exemple constituer une chaudière de production de vapeur dans un réseau de tubes 72 placés dans le lit fluidisé ou bien un réacteur de gazéification. Dans de nombreux cas, il est nécessaire de contrôler avec précision la température et l'on peut, à cet effet récupérer les particules fines du lit fluidisé entraîné par la cheminée, puis, après les avoir soumises à un refroidissement, les réintroduire dans le lit fluidisé avec un débit contrôlé, l'excès de particules solides étant évacué par un orifice 13 placé à la base de la trémie 11 constituant la partie inférieure de la cuve 1. Un tel procédé nécessite un contrôle précis de la température de la matière solide à la sortie 4 de l'échangeur et il est particulièrement intéressant d'utiliser à cet effet un échangeur de chaleur à coefficient d'échange variable comme celui qui vient d'être décrit. En effet, on peut par exemple placer à la sortie 4 de l'échangeur 1 un capteur de température 8 qui envoie un signal représentatif de la température mesurée à un circuit de régulation 80 susceptible d'actionner la vanne 61 de réglage du débit de gaz injecté de façon à déterminer les variations du niveau C de fluidisation permettant de maintenir constante la température de sortie des matières même en cas de variation du débit et/ou de la température de celle-ci à l'entrée dans l'échangeur.

Dans l'application qui vient d'être décrite, l'échangeur à coefficient de transfert réglable selon l'invention, est utilisé pour le contrôle de la température de la matière granulaire mais il est bien évident que l'utilisation d'un tel échangeur permet également de contrôler la température du fluide caloporteur circulant à l'intérieur de l'organe d'échange en faisant varier le niveau de fluidisation. Dans le cas classique où l'organe d'échange est constitué de tubes parallèles de circulation du fluide, il est avantageux que ceux-ci soient orientés verticalement, comme on l'a représenté sur les figures, de façon à répartir de façon homogène l'effet sur la température du fluide de la variation du niveau de fluidisation.

Mais, d'une façon générale, il existe d'autres applications pour lesquelles l'utilisation d'un échangeur à coefficient d'échange variable selon l'invention présente des avantages.

## Revendications

1. Procédé de réglage du coefficient de transfert thermique d'un échangeur de chaleur comprenant une cuve (1) à axe vertical dans laquelle est ménagée une circulation descendante d'une charge de matière granulaire sous forme d'un lit mobile (2), un organe d'échange (5) allongé s'étendant entre deux niveaux, respectivement inférieur (B) et supérieur (A) de la cuve (1) et des moyens (6) d'injection au-dessous de la charge de matière (2) d'un gaz réparti de façon homogène, pour la formation d'un courant ascendant de fluidisation, caractérisé par le fait que l'on règle les conditions de circulation du courant ascendant de gaz de telle sorte que la vitesse de circulation ascendante soit initialement inférieure, à la base de la cuve (1) à la vitesse critique de fluidisation puis augmente progressivement et atteigne ladite vitesse critique à un niveau réglable (C) compris entre les niveaux inférieur (B) et supérieur (A) de l'organe d'échange (5), celui-ci couvrant ainsi deux zones superposées de la charge de hauteurs variables en sens inverse l'une de l'autre, une zone inférieure (22) dense à faible coefficient d'échange et une zone supérieure (21) fluidisée à fort coefficient d'échange, le réglage du niveau de fluidisation (C) permettant de déterminer le coefficient d'échange global de l'ensemble de l'échangeur (1).

2. Procédé de réglage selon la revendication 1, caractérisé par le fait que l'on règle le niveau (C) de fluidisation de la charge (2) en faisant varier le débit du gaz de fluidisation injecté au-dessous de la charge (2).

3. Procédé de réglage selon l'une des revendications 1 et 2, caractérisé par le fait que, la matière granulaire subissant un refroidissement entre les extrémités supérieure et inférieure de la cuve, on règle les conditions de circulation du gaz qui circule à contre courant vers le haut de telle sorte que l'échauffement correspondant détermine une augmentation de la vitesse de circulation ascendante du gaz supérieure à la différence entre la vitesse critique de fluidisation et la vitesse initiale d'injection à la base de l'échangeur (1), et l'on choisit cette vitesse initiale de telle sorte que, compte tenu de l'augmentation subie, la vitesse critique de fluidisation soit atteinte au niveau souhaité de l'échangeur.

4. Procédé de réglage selon l'une quelconque des revendications précédentes, caractérisé par le fait que l'on détermine une augmentation de la vitesse de circulation ascendante du gaz par rétrécissement progressif de la section de passage (S) de l'échangeur (1) du bas au haut de celui-ci.

5. Procédé de réglage selon l'une des revendications précédentes, caractérisé par le fait que l'on règle le niveau (C) de fluidisation en effectuant l'injection du gaz par des rampes séparées (63, 64, 65) s'étendant transversalement sur toute la largeur de l'échangeur et réparties du bas en haut de ce dernier, les débits injectés par chacune des rampes étant réglables individuellement.

6. Procédé de réglage du transfert thermique selon l'une des revendications 1 à 5, dans un échangeur utilisé pour le refroidissement d'une matière granulaire, caractérisé par le fait que l'on règle la température de la matière à la sortie (4) de l'échangeur par variation du niveau de fluidisation (C) en agissant sur le débit de gaz injecté dans l'échangeur (1).

7. Procédé de réglage du transfert thermique selon l'une des revendications 1 à 5, dans un échangeur utilisé pour le chauffage d'un fluide caloporteur circulant à l'intérieur de l'organe d'échange (5), caractérisé par le fait que l'on règle la quantité de chaleur transférée au fluide caloporteur par variation du niveau de fluidisation (C).

8. Echangeur de chaleur à coefficient d'échange variable comprenant une cuve (1) à axe vertical munie, à ses extrémités supérieure et inférieure, respectivement de moyens d'alimentation (3) et d'évacuation (4) d'une matière granulaire (2) remplissant la cuve au moins partiellement, un organe d'échange allongé (5) s'étendant à l'intérieur de la cuve (1) entre deux niveaux, respectivement haut (A) et bas (B) de celle-ci, et des moyens (6) d'injection d'un gaz à la base de la cuve (1), caractérisé par le fait qu'il est muni de moyens de réglage du transfert de chaleur entre la matière granulaire et l'organe d'échange, comprenant des moyens d'augmentation progressive de la vitesse de circulation ascendante du gaz injecté de la partie inférieure à la partie supérieure de la cuve, à partir d'une vitesse initiale inférieure à la vitesse critique de fluidisation et un moyen (6) de réglage de la vitesse initiale à la base de la cuve (1) pour le contrôle du niveau (C) où est atteint la vitesse critique de fluidisation.

9. Echangeur de chaleur selon la revendication 8, caractérisé par le fait que le moyen d'augmentation de la vitesse de circulation est constitué par un rétrécissement progressif de la section transversale (5) de passage du gaz du bas en haut de l'échangeur.

10. Echangeur de chaleur selon la revendication 8, caractérisé par le fait que le moyen d'augmentation de la vitesse de circulation est constitué par une pluralité de rampes d'injection (6, 64, 65) réparties à différents niveaux sur la hauteur de la cuve (1) et munies de moyens individuels (630, 640, 650) de réglage des débits injectés.

11. Echangeur de chaleur selon l'une des revendications 8 à 10, caractérisé par le fait qu'il est associé à une enceinte (7) dans laquelle est réalisé un lit fluidisé de particules solides et reliée par une cheminée (73) à un dispositif (71) de récupération des particules entraînées avec les gaz, qui est relié à la partie supérieure de la cuve (1) et constitue le moyen d'alimentation en matière granulaire, la partie inférieure (11) de la cuve étant reliée à l'enceinte de fluidisation par une conduite (4) de recyclage des particules après refroidissement contrôlé de celles-ci dans l'échangeur (1).

**Claims**

1. Process for adjusting the heat transfer coefficient of a heat exchanger incorporating a vessel (1) with a vertical axis in which is arranged a downward circulation of a charge of granular material in the form of a movable bed (2), an elongated exchange member (5) extending between two levels, lower (B) and upper (A) respectively, of the vessel (1) and means (6) for injecting below the charge of material (2) a uniformly distributed gas, to form a rising fluidization stream, characterised in that the circulation conditions of the rising stream of gas are adjusted so that the velocity of the rising circulation is initially below, at the base of the vessel (1), the critical velocity for fluidization, then gradually increases and reaches the said critical velocity at an adjustable level (C) between the lower (B) and upper (A) levels of the exchange member (5), the latter thereby covering two superposed zones of the charge which can be varied in heights reciprocally to each other, a lower dense zone (22) with a low transfer coefficient and a fluidized upper zone (21) with a high transfer coefficient, the adjustment of the fluidization level (C) making it possible to determine the overall transfer coefficient of the whole exchanger (1).

2. Adjustment process according to Claim 1, characterised in that the charge (2) fluidization level (C) is adjusted by varying the flowrate of the fluidization gas injected below the charge (2).

3. Adjustment process according to either of Claims 1 and 2, characterised in that, while the granular material undergoes cooling between the upper and lower ends of the vessel, the circulation conditions of the gas which circulates countercurrentwise upwards are adjusted so that the corresponding heating determines an increase in the velocity of the rising circulation of the gas which is greater than the difference between the critical velocity for fluidization and the initial injection velocity at the base of the exchanger (1), and this initial velocity is chosen so that, allowing for the increase experienced, the critical velocity for fluidization is reached at the desired level of the exchanger.

4. Adjustment process according to any one of the preceding claims, characterised in that an increase in the velocity of the rising circulation of the gas is determined by a gradual narrowing of the flow cross-section (S) of the exchanger (1) from the bottom to the top of the latter.

5. Adjustment process according to one of the preceding claims, characterised in that the fluidization level (C) is adjusted by carrying out the gas injection using separate banks (63, 64, 65) extending transversely over the whole width of the exchanger and distributed from the bottom to the top of the latter, the rates of the flows injected by each of the banks being individually adjustable.

6. Process for adjusting heat transfer according to one of Claims 1 to 5, in an exchanger employed for cooling a granular material, characterised in that the temperature of the material is adjusted at the outlet (4) of the exchanger by varying the fluidization level (C) by controling the flowrate of the gas injected into the exchanger (1).

7. Process for adjusting the heat transfer according to one of Claims 1 to 5, in an exchanger employed for heating a heat transfer fluid circulating inside the exchange member (5), characterised in that the quantity of heat transferred to the heat transfer fluid is adjusted by varying the fluidization level (C).

8. Heat exchanger with a variable transfer coefficient, incorporating a vessel (1) with a vertical axis, equipped, at its upper and lower ends respectively, with means for feeding (3) and discharging (4) a granular material (2) at least partly filling the vessel, an elongated exchange member (5) extending inside the vessel (1) between two levels, high (A) and low (B) respectively, of the latter, and means (6) for injecting a gas at the bottom of the vessel (1), characterised in that it is equipped with means for adjusting the heat transfer between the granular material and the exchange member, incorporating means for gradually increasing the velocity of rising circulation of the injected gas from the lower part to the higher part of the vessel, starting from an initial velocity below the critical velocity for fluidization, and means (6) for adjusting the initial velocity at the bottom of the vessel (1), for controling the level (C) where the critical velocity for fluidization is reached.

9. Heat exchanger according to Claim 8, characterised in that the means for increasing the circulation velocity consist of a gradual narrowing of the cross-section (5) of the gas passage from the bottom to the top of the exchanger.

10. Heat exchanger according to Claim 8, characterised in that the means for increasing the circulation velocity consists of a plurality of injection banks (6, 64, 65) distributed at various levels over the height of the vessel (1) and equipped with individual means (630, 640, 650) for adjusting the rates of the injected flows.

11. Heat exchanger according to one of Claims 8 to 10, characterised in that it is associated with an enclosure (7) in which a fluidized bed of solid particles is produced and which is connected by a funnel (73) to a device (71) for recovering the particles entrained with the gases, which is connected to the upper part of the vessel (1) and forms the means of feeding granular material, the lower part (11) of the vessel being connected to the fluidization enclosure by a conduit (4) for recycling the particles after controlled cooling of the latter in the exchanger (1).

**Ansprüche**

1. Verfahren zur Regelung des Wärmeübertragungskoeffizienten eines Wärmeaustauschers mit einem Behälter (1) mit vertikaler Achse, in welchem ein absteigender Kreislauf eines Einsatzes von granuliertem Material in Form eines Wirbelbettes (2) hergestellt wird, mit einem langgestreckten Austauscherorgan (5), das sich zwischen zwei Höhenlagen, einer unteren Höhenlage (B) und einer oberen Höhenlage (A) des Behälters (1) erstreckt, und mit einer Einrichtung (6) zum Einblasen eines homogen verteilten Gases unter dem Materialeinsatz (2), um einen aufsteigenden Wirbelstrom zu bilden, dadurch gekennzeichnet, daß die Zirkulationsbedingungen des aufsteigenden Gasstromes so geregelt werden, daß die aufsteigende Zirkulationsgeschwindigkeit anfänglich an der Basis des Behälters (1) geringer ist als die kritische Wirbelstrombildungsgeschwindingkeit und dann allmählich ansteigt und die kritische Geschwindigkeit auf einer einregelbaren Höhenlage (C) erreicht, die zwischen der unteren Höhenlage (B) und der oberen Höhenlage (A) des Austauscherorganes (5) liegt, welches daher zwei übereinandergelagerte Zonen des Einsatzes von in inverser Richtung veränderlicher Höhe überdeckt, einer unteren, dicht Zone (22) von niedrigem Wärmeaustausch-Koeffizienten und einer oberen Wirbelstromzone (21) von hohem Wärmeaustausch-Koeffizienten, wobei die Einregelung der Höhenlage (C) des Wirbelstromes bzw. der Fluidisierung eine Festlegung des globalen Austausch-Koeffizienten der gesamten Austauscheranordnung (19) zuläßt.

2. Regelungsverfahren nach Anspruch 1, dadurch gekennzeichnet, daß die Höhenlage (C) des Wirbelstromes des Einsatzes (2) durch Veränderung der unterhalb des Einsatzes (2) eingeblasenen Menge an fluidisierendem bzw. wirbelstrombildendem Gas geregelt wird.

3. Regelungsverfahren nach einem der Ansprüche 1 und 2, dadurch gekennzeichnet, daß, da das granulierte Material einer Abkühlung zwischen dem oberen und unteren Ende des Behälters unterworfen wird, die Zirkulationsbedingungen des Gases, das im Gegenstrom nach oben zirkuliert, so geregelt werden, daß eine entsprechende Erwärmung eine Steigerung der aufsteigenden Zirkulationsgeschwindigkeit des Gases bewirkt, die größer ist als der Unterschied zwischen der kritischen Fluidisierungsgeschwindigkeit und der anfänglichen Einblasgeschwindigkeit an der Basis des Austauschers, und daß diese anfängliche Geschwindigkeit so gewählt wird, daß in Anbetracht der eingetretenen Erhöhung die kritische Wirbelstrombildungs- bzw. Fluidisierungsgeschwindigkeit auf der gewünschten Höhe des Austauschers erzielt werden kann.

4. Regelungsverfahren nach einem der vorhergehenden Ansprüche, dadurch gekennzeichnet, daß eine Steigerung der aufsteigenden Zirkulationsgeschwindigkeit des Gases durch eine allmähliche Verengung des Querschnittes des Durchlasses (S) des Austauschers (1) von unten nach oben bewirkt wird.

5. Regelungsverfahren nach einem der vorhergehenden Ansprüche, dadurch gekennzeichnet, daß die Höhenlage (C) des Wirbelstromes bzw. der Fluidisierung durch Einblasen des Gases über getrennte Rampen (63, 64, 65) bewirkt wird, die sich in Querrichtung über die gesamte Breite des Austauschers erstrecken und in diesem von unten nach oben verteilt sind und daß die von jeder der Rampen eingeblasenen Gasmengen individuell regelbar sind.

6. Verfahren zur Regelung der Wärmeübertragung nach einem der Ansprüche 1 bis 5, in einem Austauscher, der zur Kühlung eines granulierten Materials verwendet wird, dadurch gekennzeichnet, daß die Temperatur des Materials am Ausgang (4) des Austauschers durch Veränderung der Höhenlage (C) der Wirbelstromschicht durch Einwirken auf die in den Austauscher (1) eingeblasene Gasmenge geregelt wird.

7. Verfahren zur Regelung der Wärmeübertragung nach einem der Ansprüche 1 bis 5, in einem Austauscher, der für die Erwärmung eines wärmeführenden Fluids verwendet wird, das im Inneren des Austauscherorganes (5) zirkuliert, dadurch gekennzeichnet, daß die Menge an auf das wärmeführende Fluid übertragene Wärme durch Veränderung der Höhenlage (C) der Wirbelstromschicht geregelt wird.

8. Wärmeaustauscher mit variablem Austausch-Koeffizienten mit einem Behälter (1) mit vertikaler Achse, der an seinen oberen und unteren Ende jeweils mit einer Zufuhreinrichtung (3) und einer Auslaßeinrichtung (4) für ein granuliertes Material (2) versehen ist, welches den Behälter wenigstens teilweise ausfüllt, und mit einem langgestreckten Austauscherorgan (5), das sich im Inneren des Behälters (1) zwischen zwei Höhenlagen, einer oberen Höhenlage (A) und einer unteren Höhenlage (B) des Behälters erstreckt, und mit einer Einrichtung (6) zum Einblasen von Gas an der Basis des Behälters (1), dadurch gekennzeichnet, daß der Austauscher mit einer Einrichtung zur Regelung der Wärmeübertragung zwischen dem granulierten Material und dem Austauscherorgan versehen ist, welche Einrichtung eine Einrichtung zur allmählichen Steigerung der ansteigenden Zirkulationsgeschwindigkeit des eingeblasenen Gases vom unteren zum oberen Abschnitt des Behälters ausgehend von einer anfänglichen Geschwindigkeit aufweist, die geringer als die kritische Wirbelstrombildungsgeschwindigkeit ist, und die Einrichtung (6) für die Einstellung der anfänglichen Geschwindigkeit an der Basis des Behälters (1) zur Einregelung der Höhenlage (C) besitzt, auf welcher die kritische Wirbelstrom- bzw. Fluidisierungsgeschwindigkeit erreicht wird.

9. Wärmeaustauscher nach Anspruch 8, dadurch gekennzeichnet, daß die Einrichtung zur Steigerung der Zirkulationsgeschwindigkeit von einer allmählichen Verengung des Querschnittes (5) des Gasdurchlasses von unten nach oben im Austauscher gebildet ist.

10. Wärmeaustauscher nach Anspruch 8, dadurch gekennzeichnet, daß die Einrichtung zur Steigerung der Zirkulationsgeschwindigkeit aus einer Vielzahl von Einblasrampen (63, 64, 65) besteht, die auf verschiedenen Höhen über die Höhe des Behälters (1) verteilt sind und mit individuellen Einrichtungen (630, 640, 650) zur Regelung der eingeblasenen Gasmengen versehen sind.

11. Wärmetauscher nach einem der Ansprüche 8 bis 10, dadurch gekennzeichnet, daß er einer Hülle (7) zugeordnet ist, in welcher ein aus festen Teilchen bestehendes Wirbelbett hergestellt ist, welche Hülle über einen Schacht (73) mit einer Einrichtung (71) zur Rückgewinnung der von den Gasen mitgerissenen Teilchen verbunden ist, die im oberen Abschnitt des Behälters (1) angeschlossen ist und die Zufuhreinrichtung für das granulierte Material bildet, wobei der untere Abschnitt (11) des Behälters mit der Wirbelbetthülle über eine Rückführungsleitung (4) für die Teilchen nach der geregelten Abkühlung derselben im Austauscher (1) verbunden ist.

Fig 1   0 095 427   Fig 2

Fig 3

Fig 4

Fig 5